# EUROPÄISCHE PATENTSCHRIFT

(11) **EP 1 016 475 B1**
(45) Veröffentlichungstag und Bekanntmachung des Hinweises auf die Patenterteilung: **14.07.2004**
(21) Anmeldenummer: 99125143.0
(22) Anmeldetag: 16.12.1999
(51) Int. Cl.: B21F 1/00, B23Q 1/58

(54) **Bearbeitungseinrichtung**
Working device
Dispositif de travail

(30) Priorität: 28.12.1998 DE 19860513
(43) Veröffentlichungstag der Anmeldung: 05.07.2000
(73) Patentinhaber: Otto Bihler Handels-Beteiligungs-GmbH, 87642 Halblech (DE)
(72) Erfinder: Bihler, Mathias, 87642 Halblech (DE); Köpf, Johann, 87642 Halblech (DE)
(74) Vertreter: Tiesmeyer, Johannes, Dr.

(56) Entgegenhaltungen:
- EP-A- 0 432 768
- DE-A- 19 700 095

## Beschreibung

Die Erfindung betrifft ein Linearstellgerät
mit einem einen Ständerteil und einen Läuferteil umfassenden elektrischen Drehmotor, dessen Läuferteil in definierte Winkelstellungen zum Ständerteil durch elektrische Steuermittel einstellbar ist,
ferner mit einer ortsfest gegenüber dem Ständerteil festgelegten Linearführungseinheit,
ferner mit einer unverdrehbar in der Linearführungseinheit entlang einer Linearführungsbahn geführten Schlitteneinheit,
ferner mit einem Schraubtrieb, dieser Schraubtrieb aufgebaut mit
einer zur gemeinsamen Drehbewegung mit dem Läuferteil verbundenen in ihrer Achsrichtung gegenüber dem Ständerteil feststehenden Spindel und
einer mit dieser Spindel zusammenwirkenden, zur gemeinsamen Linearbewegung mit der Schlitteneinheit drehfest verbundenen Spindelmutter,
wobei eine in dem Ständerteil durch ein Radiallager gelagerte Ausgangswelle des Läuferteils in Flucht mit der Spindel angeordnet und mit der Spindel zur gemeinsamen Drehbewegung durch eine Kupplungseinheit verbunden ist.

Die vorliegende Erfindung betrifft überdies die Verwendung von derartigen Linearstellgeräten in Qbjektbearbeitungseinrichtungen gemäß Anspruch 18.

Ein solches Linearstellgerät ist von einer Bearbeitungseinrichtung in Form einer Drahtbiegemaschine aus der DE 197 00 095 A1 bekannt. Bei Drahtbiegemaschinen und insbesondere auch bei Bearbeitungsmaschinen, die für Montagezwecke zum Einsatz kommen, ist der für Bearbeitungswerkzeuge und deren Antrieb verfügbare Raum häufig sehr beschränkt, so daß die dort einzubauenden Komponenten klein und möglichst flexibel hinsichtlich ihrer Positionierung gestaltet sein sollten.

Bei der Bearbeitungseinrichtung nach der oben genannten DE 197 00 095 A1 wird den Anforderungen an geringen Raumbedarf nicht hinreichend Rechnung getragen.

Der Erfindung liegt deshalb die Aufgabe zugrunde, ein Linearstellgerät der eingangs bezeichneten Art kleinbauend auszuführen.

Zur Lösung dieser Aufgabe wird erfindungsgemäß die Kombination folgender Merkmale vorgeschlagen:
a) die Schlitteneinheit umfaßt einen kreiszylindrischen Rohrkörper mit einer Achse, einem in Achsrichtung verlaufenden Spindelaufnahmekanal und einer radial äußeren kreiszylindrischen Führungsfläche;
b) die Führungseinheit umfaßt einen Führungskanal mit einer radial inneren kreiszylindrischen Führungsfläche;
c) die radial äußere kreiszylindrische Führungsfläche des Rohrkörpers liegt im wesentlichen auf ihrer ganzen jeweiligen Überlappungslänge in gleitendem Führungseingriff mit der radial inneren Führungsfläche des Führungskanals;
d) innerhalb des Rohrkörpers ist die Spindelmutter und eine Aufnahmekammer für wenigstens einen Teil der Kupplungseinheit untergebracht.

Die Einhaltung kleiner äußerer Abmessungen gelingt bei der erfindungsgemäßen Ausbildung durch die Kombination der vorstehend aufgeführten Merkmale. Durch die Merkmale a) bis c) wird erreicht, daß auch bei verhältnismäßig geringem Innendurchmesser des Führungskanals und entsprechend geringem Außendurchmesser des Rohrkörpers eine reibungsarme und ruckfreie Führung selbst dann noch erreicht wird, wenn bei Annäherung an eine Extremstellung die Überlappungslänge von Rohrkörper und Führungseinheit klein wird und dies sogar dann noch, wenn durch die Betriebsbelastungen an dem Bearbeitungselement Biegekräfte auf den Rohrkörper ausgeübt werden. Dieser Vorteil besteht unabhängig davon, in welcher Richtung etwaige Biegekräfte angreifen. Dies sind wesentliche Vorteile gegenüber der Konstruktion nach der eingangs genannten DE 197 00 095 A1, bei welcher die Querschnitte des Führungskanals und des Rohrkörpers quadratisch sind und die Führungseigenschaften zumindest bei bestimmten Belastungsformen unbefriedigend werden. Darüber hinaus besteht gegenüber der bekannten Konstruktion der Vorteil, daß die Bearbeitung zylindrischer Flächen gegenüber der Bearbeitung von prismatischen Flächen mit Rechteckquerschnitt wesentlich vereinfacht ist. Dank der inhärent besseren Führungseigenschaften lassen sich erfindungsgemäße Linearstellgeräte bei gleichen Anforderungen an die Führungseigenschaften mit geringerem Querschnitt ausführen.

Die bei den erfindungsgemäßen Linearstellgeräten sich somit ergebende größere Schlankheit läßt es zu, die Achse des jeweiligen Stellgeräts näher an die Kraftangriffslinie des jeweils zugehörigen Bearbeitungselements heranzurücken und damit für geringere Biegebelastungen auf den Rohrkörper zu sorgen. Dies erlaubt den Einsatz von Linearbiegegeräten mit nochmals vergrößerter Schlankheit.

Durch das Merkmal d) wird erreicht, daß die für die Bereitstellung eines bestimmten Bewegungshubs der Linearbewegung erforderliche Gesamtlänge des Stellgeräts im Vergleich zu der Konstruktion nach der DE 197 00 095 A1 erheblich reduziert werden kann. Auch dies ist ein Vorteil im Sinne der Verringerung des Raumbedarfs des jeweiligen Stellgeräts und seines zugehörigen Bearbeitungselements. Weiterhin erübrigt sich wegen der Unterbringung der Spindelmutter innerhalb des Rohrkörpers eine Kapselung empfindlicher Teile gegen äußere Krafteinwirkungen, so daß auch aus diesem Grund leichter und damit raumsparender gebaut werden kann. Diese Möglichkeit des leichteren und raumsparenden Bauens besteht auch für die Spindel. Wenn die Spindel demgemäß mit geringerem Querschnitt ausgeführt werden kann, so ergibt dies einen weiteren sehr bedeutsamen Vorteil: Die von dem Stellgerät erwarteten linearen Stellgeschwindigkeiten sind gelegentlich sehr groß. Es gibt Fälle, in denen lineare Stellgeschwindigkeiten von maximal 0,5 - 1,0 m/sec bei Haltekräften von 700 N im Dauerbetrieb und Maximalkräften bis zu 3000 N im Kurzzeitbetrieb erwartet werden. Diese hohen Geschwindigkeiten können nur dann vorteilhaft ausgenutzt werden, wenn die Hochlaufzeiten bis zum Erreichen der diesen Lineargeschwindigkeiten jeweils entsprechenden Drehzahl sehr kurz sind. Beispielsweise wird gefordert, daß die Hochlaufzeit bis zum Erreichen einer Drehzahl von 6000 Umdrehungen der Spindel in der Größenordnung von 18 mm/sec liegen. Bei diesen Anforderungen spielt das Trägheitsmoment der Spindel eine bedeutende Rolle. Die Hochlaufzeit kann um so mehr gekürzt werden, je geringer das Trägheitsmoment der Spindel ist und je geringer der Durchmesser der Spindel ist.

Für das Erreichen kleiner Trägheitsmomente der mit der Spindel drehenden Gesamtmasse ist es auch günstig, wenn die Ausgangswelle des Läuferteils an einer zwischen dem Radiallager und der Kupplungseinheit am Ständerteil angeordneten Stützplatte in entgegengesetzten Kraftübertragungsrichtungen durch je ein Axiallager in Achsrichtung der Ausgangswelle abgestützt ist. Bei einer solchen Gestaltung können nämlich die mitdrehenden Teile der Axiallager auf minimalen Beitrag zum Gesamtträgheitsmoment reduziert werden, insbesondere wenn als Axiallager Nadellager verwendet werden, deren Nadeln oder Rollen kranzartig mit ihren Nadel- bzw. Rollenachsen zu der Achse der Ausgangswelle hin gerichtet sind. Es hat sich gezeigt, daß bei Anwendung solcher Nadel- oder Rollenlager, welche lediglich der Axialkraftübertragung dienen, der Trägheitsmomentbeitrag der Lagerelemente zu dem Gesamtträgheitsmoment der mit der Spindel rotierenden Massen kleiner gehalten werden kann als bei Konstruktionen der aus der DE 197 00 095 A1 bekannten Bauart, bei der mehrere Lager mit Radiallagerungs- und Axiallagerungsfunktion eingesetzt sind.

Die diskutierten Bearbeitungseinrichtungen sind insbesondere für Montageeinrichtungen geeignet, wo große Stellgeschwindigkeiten und große Stellhübe gefordert werden, die Anforderungen an die Stellkräfte häufig jedoch relativ gering sind. Daneben soll aber der Einsatz von Bearbeitungseinrichtungen auch bei Biege- und Stanzautomaten nicht ausgeschlossen werden, wo in der Regel geringere Hübe, aber größere Stellkräfte erforderlich sind.

Um eine stabile Befestigung zwischen der Führungseinheit und dem Ständerteil des Drehmotors zu ermöglichen, ist es günstig, wenn die Führungseinheit bis an die Stützplatte heranreicht. Eine derartige Anordnung ermöglicht, daß der Drehmotor unter Vermittelung der Stützplatte an die Führungseinheit über Verbindungsmittel, beispielsweise Schraubbolzen, angeflanscht werden kann, so daß der Drehmotor in fester räumlicher Zuordnung zu der Führungseinheit steht. Im Transportzustand, wird man das Linearstellgerät in der Regel auf die kürzeste Länge einstellen: dann sind auch die empfindlichen Teile der Kupplungseinheit vollständig gekapselt. Die Schnittstelle zwischen Führungseinheit und Stützplatte kann ggf. auch mittels schmutzabweisender und/oder fluiddichter Dichtungen abgedichtet werden.

Zur axialen Ausrichtung der im Ständerteil des Drehmotors gelagerten Ausgangswelle des Läuferteils zu der über die Spindelmutter und die Schlitteneinheit in der Führungseinheit gelagerten Spindel kann die Stützplatte sowohl gegenüber der Ständereinheit als auch gegenüber der Führungseinheit durch Zentriermittel zentriert sein. Eine derartige beidseitige Zentrierung der Stützplatte führt bei der Montage mit einfachen Mitteln ohne Justieraufwand zu einer gegenseitigen Ausrichtung von Drehmotor und Führungseinheit.

Um bei vorgegebenem Hub des Rohrkörpers die Führungsstabilität und die Führungsgenauigkeit des Rohrkörpers innerhalb der Führungseinheit selbst im Bereich der motorfernsten Stellung des Rohrkörpers weiter zu verbessern, kann vorgesehen sein, daß der Rohrkörper in seiner motornächsten Stellung mit seinem motorzugekehrten Ende bis annähernd an den Rotationsmotor heranreicht, vorzugsweise bis zum Anschlag mit der Stützplatte. In diesem Fall nimmt der Rohrkörper in seiner motornächsten Stellung die gesamte Kupplungseinheit auf, wobei die Führungsfläche des Rohrkörpers um die Länge des mit der Kupplungseinheit in axialer Richtung überlappenden Rohrkörperabschnitts verlängert ist. Eine derartige Führungsflächenverlängerung des Rohrkörpers führt bei dem vorgegebenen Hub zu einer größeren Überlappungslänge von Rohrkörper und Führungseinheit in der motorfernsten Stellung des Rohrkörpers, was neben den Verbesserungen der Führungseigenschaften des Linearstellgeräts auch die Empfindlichkeit gegenüber am Objektbearbeitungselement angreifenden Biegekräften verringert.

Gute Führungseigenschaften lassen sich erfindungsgemäß jedenfalls dann erreichen, wenn in der vom Drehmotor am weitesten entfernten Stellung des Rohrkörpers die noch verbleibende Überlappungslänge der Führungfläche der Führungseinheit und der Führungsfläche des Rohrkörpers mindestens das Zweifache des Durchmessers der Führungsfläche des Rohrkörpers beträgt.

Neben Biegekräften können am Bearbeitungselement auch Kräfte entlang der Linearführungsbahn des Linearstellgeräts angreifen, insbesondere beim Vorschub des Bearbeitungselements. Um zu verhindern, daß diese Kräfte auf den Läuferteil des Drehmotors übertragen werden und damit den Betrieb des Drehmotors beeinträchtigen und dessen Lebensdauer verkürzen, kann vorgesehen sein, daß die Spindel gegen Annäherung an die Ausgangswelle durch eine auf Axialdruck belastbare, drehmomentschlüssig und zugkraftschlüssig mit der Ausgangswelle und der Spindel verbundene Kupplungshülse an einem ersten Axiallager und über dieses an der Stützplatte formschlüssig abgestützt ist wobei dann die Spindel gegen Entfernung von der Ausgangswelle vermittels des Zugkraftschlusses der Kupplungshülse mit der Ausgangswelle und der Spindel über ein zweites Axiallager und über dieses wiederum an der Stützplatte abgestützt ist. Durch diese Anordnung lassen sich bezüglich der Ausgangswelle des Läuferteils in Axialrichtung wirkende Zug- und Druckkräfte über die Stützplatte ableiten. Ferner stellt eine derartige Axiallageranordnung sicher, daß die Spindel durch die Verbindung mit der Kupplungshülse gegenüber der Ausgangswelle des Läuferteils in Richtung der Linearführungsbahn unbewegbar ist, wodurch eine exakte und reproduzierbare Positionierung des Bearbeitungselements gegenüber der Führungseinheit gewährleistet ist.

Um eine einfache und sichere Anbringung des Linearstellgeräts an der Objektbearbeitungseinrichtung zu ermöglichen, ist es günstig, wenn die Führungseinheit - in einer zur Linearführungsbahn orthogonalen Schnittebene betrachtet - einen quadratischen Außenumriß besitzt und mit Positionierungs- und Befestigungsmitteln zur Befestigung an einem Träger ausgeführt ist. Der quadratische Außenumriß sorgt für definierte Anlageflächen, mit denen das Linearstellgerät am jeweiligen Träger der Objektbearbeitungseinrichtung anliegt. Als Positionierungsmittel können Längs- oder Quernuten in den Anlageflächen der Führungseinheit vorgesehen sein, welche unter Vermittelung von ggf. kreuzförmigen Paßfedern oder Führungskeilen zu entsprechenden Führungsnuten im Träger ausgerichtet werden. Als Befestigungsmittel können in der Führungseinheit vorgesehene Durchgangsbohrungen und/oder Gewindebohrungen vorgesehen sein, welche ein Verschrauben mit dem Träger über geeignete Verschraubungsmittel ermöglichen, wie beispielsweise über Schraubenbolzen und im Träger aufgenommenen Befestigungsmuttern bzw. Nutensteinen.

Die Führungseinheit kann aus Gußmaterial, insbesondere Stahlgußmaterial, hergestellt sein. Um während der Herstellung beim Aushärten des Gußmaterials schrumpfungsbedingte Einlaufstellen zu verhindern und um ferner eine sichere Anlage der Führungseinheit am Träger zu gewährleisten, kann vorgesehen sein, daß die Führungseinheit an ihrem Außenumfang mit Kühlrippen versehen ist, deren Hüllfläche Anlageflächen zur Anlage an einem Träger bilden.

Wie vorstehend bereits mehrfach angedeutet, können am Bearbeitungselement verschiedene Belastungszustände auftreten. So ist zu erwarten, daß neben Biegekräften und Kräften in Richtung der Linearführungsbahn auch Drehmomente auf das Linearstellgerät einwirken. Hierfür ist es günstig, wenn der Rohrkörper in dem Führungskanal durch Führungskeile, Führungsrollen oder dgl. gegen Verdrehung gesichert ist. Die Führungskeile, Führungsrollen oder dgl. können am Rohrkörper befestigt bzw. gelagert sein und in korrespondierende Führungsnuten in der Führungsfläche der Führungseinheit eingreifen. Derartige Führungsnuten können durch Räumen oder Drahterodieren hergestellt sein. Es ist jedoch gleichsam möglich, wenn auch fertigungstechnisch aufwendiger, die Führungskeile, Führungsrollen oder dgl. an der Führungseinheit anzubringen, wobei diese dann in entsprechende Führungsnuten in der Führungsfläche des Rohrkörpers eingreifen. Grundsätzlich reicht ein Führungskeil bzw. eine einzige oder eine Reihe von Führungsrollen aus, um den Rohrkörper gegen Verdrehung im Führungskanal zu sichern. Eine stabilere Verdrehsicherung erhält man allerdings, wenn zwei Führungskeile und zwei dazu korrespondierende Nuten vorgesehen sind, wobei die Führungskeile bzw. die Führungsnuten - in einer zu der Linearführungsbahn orthogonalen Schnittebene betrachtet - um 180° zueinander versetzt angeordnet sein können. Ferner ist es möglich, den Rohrkörper bzw. die Führungseinheit derart auszubilden, daß die Führungskeile um 90° versetzt ummontiert werden können, was bei der bestehenden Anordnung der beiden Führungsnuten ein um 90° verdrehtes Einführen des Rohrkörpers in die Führungseinheit und damit eine Drehung des Objektbearbeitungselements relativ zur Führungseinheit um 90° zuläßt.

Um die empfindlichen Teile innerhalb der Führungseinheit dicht zu kapseln, können zumindest an dem von dem Drehmotor abgelegenen Ende der Führungseinheit Dichtmittel angeordnet sein, welche in dichtendem Eingriff mit der kreiszylindrischen Außenumfangsfläche des Rohrkörpers stehen. Dadurch wird der Tatsache Rechnung getragen, daß im Einsatz der Objektbearbeitungseinrichtung, beispielsweise bei der Montage von Objekten, Schmutzpartikel, Späne, Kühlflüssigkeit oder dgl. auftreten, welche bei Eintritt zwischen die Führungsflächen von Rohrkörper und Führungseinheit die Führungseigenschaften verschlechtern würden. Ferner kommt den Dichtmitteln die Aufgabe zu, das Austreten von Schmiermittel aus der Führungseinheit zu verhindern.

Um eine hochpräzise Positionierung eines Objektbearbeitungselements durch das Linearstellgerät zu gewährleisten, kann vorgesehen sein, daß die Spindelmutter eine Kugelumlaufmutter ist. Kugelumlaufmuttern haben die Eigenschaft, mit minimalem Spiel auf entsprechenden Spindeln bzw. Gewindespindeln zu laufen, was zu einer nahezu spielfreien Bewegung des Rohrkörpers relativ zur Führungseinheit führt. Zusätzlich zu der spielarmen Bewegungsübertragung von der Spindel auf den Rohrkörper übernimmt die Kugelumlaufmutter eine Radiallagerfunktion zur Lagerung der Spindel innerhalb des Rohrkörpers. Es können Kugelumlaufmuttern mit 3 - 6 Kugelumläufen zum Einsatz kommen.

Um die Spindelmutter im Rohrkörper zur Bewegungsübertragung mit geringstem radialem Raumbedarf festzulegen, kann diese in einem durchmessererweiterten Abschnitt des Spindelaufnahmekanals untergebracht sein und durch eine Schraubringeinheit gegen eine Stützschulter am Ende der Durchmessererweiterung angedrückt sein. Durch diese Anordnung können Kräfte in Richtung der Linearführungsbahn je nach Kraftrichtung über die Stützschulter oder über die Schraubringeinheit vom Rohrkörper über die Spindelmutter auf die Spindel übertragen werden. Die Schraubringeinheit kann zwei in einem Innengewinde des Rohrkörpers eingeschraubte Schraubringe aufweisen, welche in Achsrichtung mittels Stiftschrauben gegeneinander verspannt sind.

Zur Abschirmung der innerhalb des Rohrkörpers aufgenommenen Spindel kann der Rohrkörper an seinem von dem Drehmotor abgelegenen Ende geschlossen und mit Befestigungsmitteln zur Befestigung eines Bearbeitungselements ausgeführt sein. Die Befestigungsmittel können von einer Polygon-Platte gebildet sein, in welcher wenigstens eine ggf. mit einem Gewinde versehene Befestigungsbohrung und/oder wenigstens eine Nut zur Positionierung und Fixierung eines Werkzeugs vorgesehen sind.

Zur Schmierung bewegter Teile einer Objektbearbeitungseinrichtung kann das Linearstellgerät mit einem Schmiernippelanschluß versehen sein, der über Schmiermittelwege mit dem jeweiligen Eingriffsbereich zwischen der Außenumfangsfläche des Rohrkörpers und der Führungsfläche der Führungseinheit und/oder mit den Axiallagern und/oder mit der Eingriffsstelle zwischen Spindel und Spindelmutter und/oder mit das Verdrehen des Rohrkörpers gegenüber der Führungseinheit hemmenden Drehsicherungsmitteln verbunden ist. Im Dauerbetrieb kann der Schmiernippel an ein Schmiermittelversorgungssystem angeschlossen sein, um regelmäßig für ausreichende Schmiermittelzufuhr zu sorgen.

Hinsichtlich der Dimensionierung der Spindelmutter, der Kupplungseinheit sowie des Rohrkörpers, und insbesondere der führungsaktiven Führungsfläche des Rohrkörpers ist es günstig, wenn die Spindelmutter und die Aufnahmekammer innerhalb eines Längsabschnitts des Rohrkörpers untergebracht sind, welcher sich ausgehend von einem dem Drehmotor zugekehrten Ende des Rohrkörpers über eine Länge erstreckt, welche weniger als 50 % der Gesamtlänge der führungsaktiven Außenumfangsfläche des Rohrkörpers beträgt.

Das Linearstellgerät ist neben seinem bevorzugten Anwendungsgebiet in Bearbeitungseinrichtungen auch für andere Zwecke anwendbar.

Die Erfindung wird im folgenden an einigen Ausführungsbeispielen anhand der beiliegenden Zeichnungen näher erläutert; es stellen dar:
- Fig.1: eine schematische Seitenansicht einer Objektbearbeitungseinrichtung;
- Fig. 2: eine Seitenansicht eines in der Objektbearbeitungseinrichtung gemäß Fig. 1 eingesetzten erfindungsgemäßen Linearstellgeräts;
- Fig. 3: das Linearstellgerät aus Fig. 2 in der Draufsicht teilweise im achsenthaltenden Längsschnitt;
- Fig. 4: einen in Fig. 3 mit IV bezeichneten vergrößerten Bildausschnitt;
- Fig. 4a: eine schematische Darstellung einer Kugelumlaufmutter;
- Fig. 5: einen Querschnitt durch das Linearstellgerät gemäß Fig. 3 entlang der Schnittlinie V-V;
- Fig. 6: einen Querschnitt durch das Linearstellgerät gemäß Fig. 3 entlang der Schnittlinie VI-VI, und
- Fig. 7: einen Querschnitt durch das Linearstellgerät gemäß Fig. 3 entlang der Schnittlinie VII-VII.

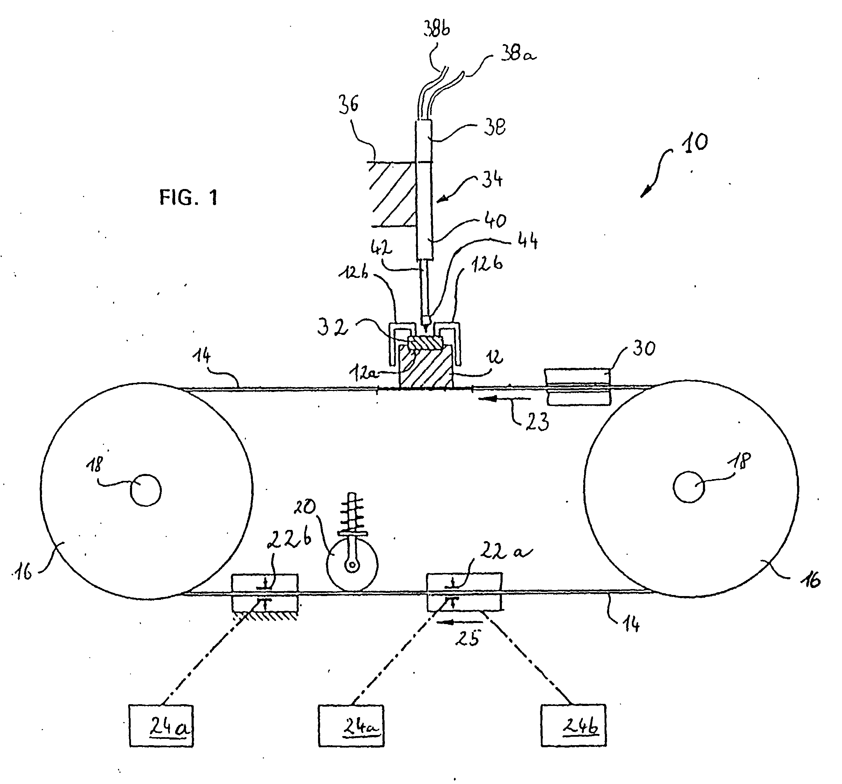

In Fig. 1 ist eine Objektbearbeitungseinrichtung - ausgeführt als Montageeinrichtung - allgemein mit 10 bezeichnet. Diese umfaßt einen Teileträger 12, welcher auf einem Transportband 14 angeordnet ist. Das Transportband 14 ist als Stahlband ausgeführt und über Führungsrollen 16 geführt, welche auf Führungsrollenachsen 18 gelagert sind. Das Transportband 14 wird durch die Spannrolle 20 gespannt und wird über eine hin- und hergehende Bandklemmvorrichtung 22a, welche über eine Steuereinrichtung 24a und eine Antriebseinrichtung 24b angetrieben wird, in Pfeilrichtung 25 bewegt, indem das Untertrum des Transportbandes 14 alternierend eingeklemmt, vorwärtsbewegt und freigegeben wird, wobei im freigegebenen Zustand die Bandklemmvorrichtung 22a wieder zurückläuft und eine ortsfeste Bandklemmvorrichtung 22b gesteuert von einer weiteren Steuereinrichtung 24a das Transportband 14 festhält. Zur exakten Positionierung des Transportbandes 14 in seinem oberen Trum sowohl in Breitenrichtung als auch in Dickenrichtung ist ein Führungsblock 30 vorgesehen.

Der Teileträger 12 ist mit einer Zentrierausnehmung 12a für die Aufnahme eines zu montierenden Werkstücks 32 versehen. Dieses Werkstück 32 ist in der Zentrierausnehmung 12a über Fixierungselemente 12b befestigt. In einer dem Teileträger 12 zugeordneten stillstehenden Bearbeitungsstation ist ein erfindungsgemäßes Linearstellgerät 34 angeordnet und an einem Träger 36 befestigt. Das Linearstellgerät 34 umfaßt einen elektrischen Drehmotor 38, welcher über eine Stromversorgungsleitung 38a und eine Steuerleitung 38b zum Einstellen definierter Winkelstellungen ansteuerbar ist. Ferner umfaßt das Linearstellgerät 34 ein führendes Gehäuse 40 sowie einen geführten Rohrkörper 42, an dessen drehmotorfernem Ende ein Montagewerkzeug 44, beispielsweise in Form einer Schraubereinrichtung, einer Einstoßeinrichtung oder auch eines angetriebenen Werkzeugs oder dgl. angebracht ist.

Im Betrieb wird, sobald der Teileträger 12 in seiner Soll-Position gegenüber dem Linearstellgerät 34 ausgerichtet ist, ein Montagevorgang durch Ausfahren des geführten Rohrkörpers 42 aus dem führenden Gehäuse 40 und Ansteuern des Montagewerkzeugs 44 vorgenommen. Nach Abschluß des Montagevorgangs wird der geführte Rohrkörper 42 wieder in das führende Gehäuse 40 zurückgefahren und das Transportband 14 mittels der Bandklemmvorrichtung 22a weiterbewegt.

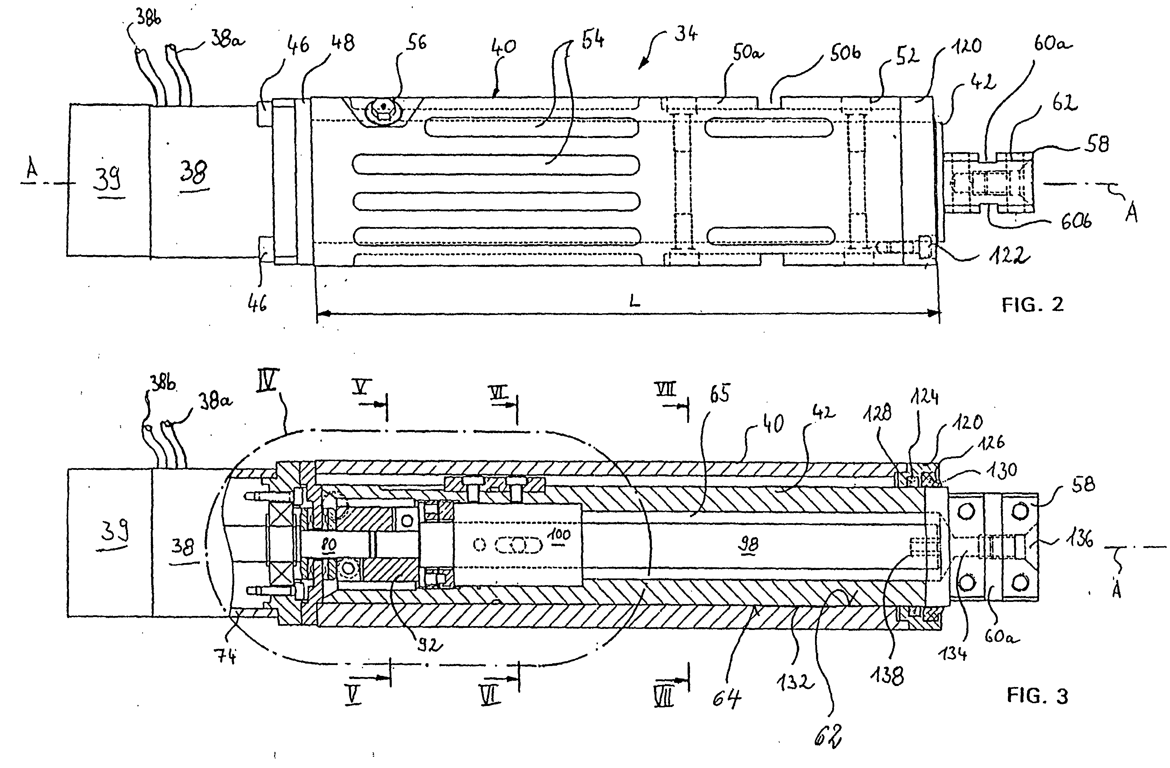

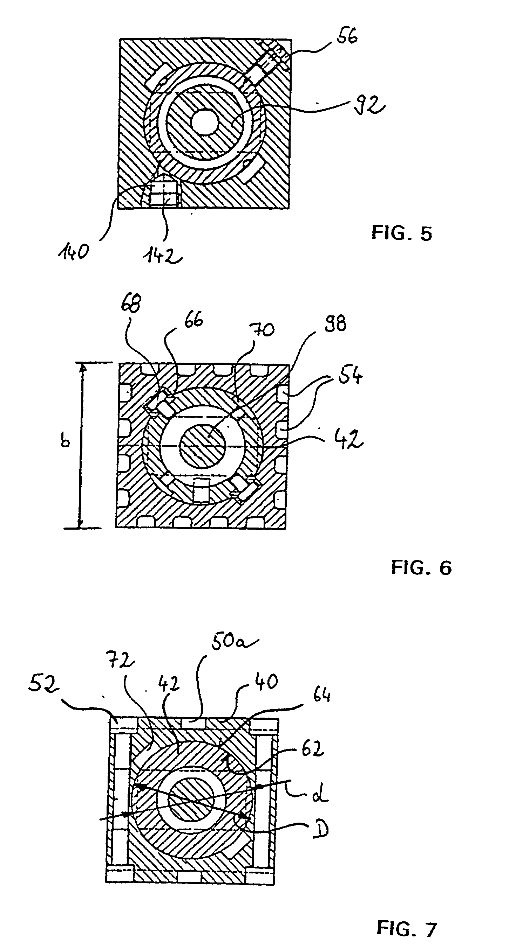

Fig. 2 zeigt eine vergrößerte Ansicht des Linearstellgeräts 34 aus Fig. 1. Auf der linken Seite von Fig. 2 ist der Drehmotor 38 mit seiner Versorgungsleitung 38a und seiner Steuerleitung 38b gezeigt. Am Drehmotor 38 ist eine Winkelcodiereinrichtung 39 angebracht, welche eine Motorumdrehung in beispielsweise 4096 Schritte unterteilt und ein entsprechndes Signal ausgibt. Der Drehmotor 38 ist über Befestigungsbolzen 46 unter Vermittelung einer Zwischenplatte 48 an das Gehäuse 40 angeflanscht. Wie mit Bezug auf Fig. 5 - 7 noch näher erläutert wird, weist das Gehäuse 40 quadratischen Außenquerschnitt mit einer Seitenlänge b auf. Im vorderen Bereich des Gehäuses 40 (in Fig. 2 in der rechten Bildhälfte) sind an der Außenfläche in Längs- und in Querrichtung Positionierungsnuten 50a und 50b angebracht, welche eine exakte Positionierung des Linearstellgeräts 34 am Träger 36 unter Vermittelung von in diese Nuten eingreifenden ggf. kreuzförmigen Führungskeilen bzw. Paßfedern erleichtern. Ferner sind im vorderen Bereich des Linearstellgeräts 34, an den sich gegenüberliegenden, die Nuten 50a und 50b aufweisenden Seitenflächen des Gehäuses 40 jeweils zwei in Längs- und Querrichtung fluchtende Bohrungen 52 vorgesehen, welche sowohl Gewindeabschnitte zum Einschrauben von Schraubenbolzen als auch Durchgangsabschnitte zum Durchstecken von Schraubenbolzen geringeren Durchmessers als auch Senkkopfabschnitte zum Versenken von Zylinderköpfen von Schraubenbolzen aufweisen.

Darüber hinaus weist das Gehäuse 40 Kühlrippen 54 auf, welche bedingt durch das Gießherstellungsverfahren des Gehäuses zur Vermeidung von schrumpfungsbedingten Einlaufstellen vorgesehen sind.

Am drehmotornahen Ende des Gehäuses ist ein Schmiernippel 56 vorgesehen, welcher eine ventilartige Verbindung mit dem Gehäuseinneren zum Einbringen von Schmiermittel vorsieht.

Das Gehäuse weist an seinem motorfernen Ende eine zylindrische Öffnung auf, aus welcher das motorferne Ende des Rohrkörpers 42 vorsteht. An diesem motorfernen Ende des Rohrkörpers 42 ist eine Werkzeugaufnahme 58 angebracht, welche in ihrer oberen und unteren Fläche jeweils eine Quernut 60a bzw. 60b sowie Gewindedurchgangsbohrungen 62 aufweist. Die Werkzeugaufnahme 58 ist über den Rohrkörper 42 entlang der angedeuteten Achse A linear bewegbar, wie nachfolgend noch detaillierter erläutert wird.

Fig. 3 zeigt eine Draufsicht des Linearstellgeräts 34 aus Fig. 2 - teilweise im achsenthaltenden Längsschnitt. In Fig. 3 erkennt man, daß der Rohrkörper 42 in seiner motornahen Stellung über die gesamte Länge des Gehäuses 40 geführt ist, wobei aus dem Schnitt entlang Linie VII-VII gemäß Fig. 7 zu entnehmen ist, daß das Gehäuse 40 eine radial innen liegende kreiszylindrische Führungsfläche 62 aufweist und daß der Rohrkörper 42 als kreiszylindrischer Rohrkörper mit einer radial außen liegenden kreiszylindrischen Außenumfangsfläche 64 ausgebildet ist, deren Außendurchmesser d derart auf den Innendurchmesser D der radial inneren kreiszylindrischen Führungsfläche 62 des Gehäuses 40 abgestimmt ist, daß der Rohrkörper 42 an der Führungsfläche 62 anliegend, präzise geführt und leichtgängig verschiebbar ist. Der Rohrkörper 42 schließt radial einwärts einen Spindelaufnahmekanal 65 ein.

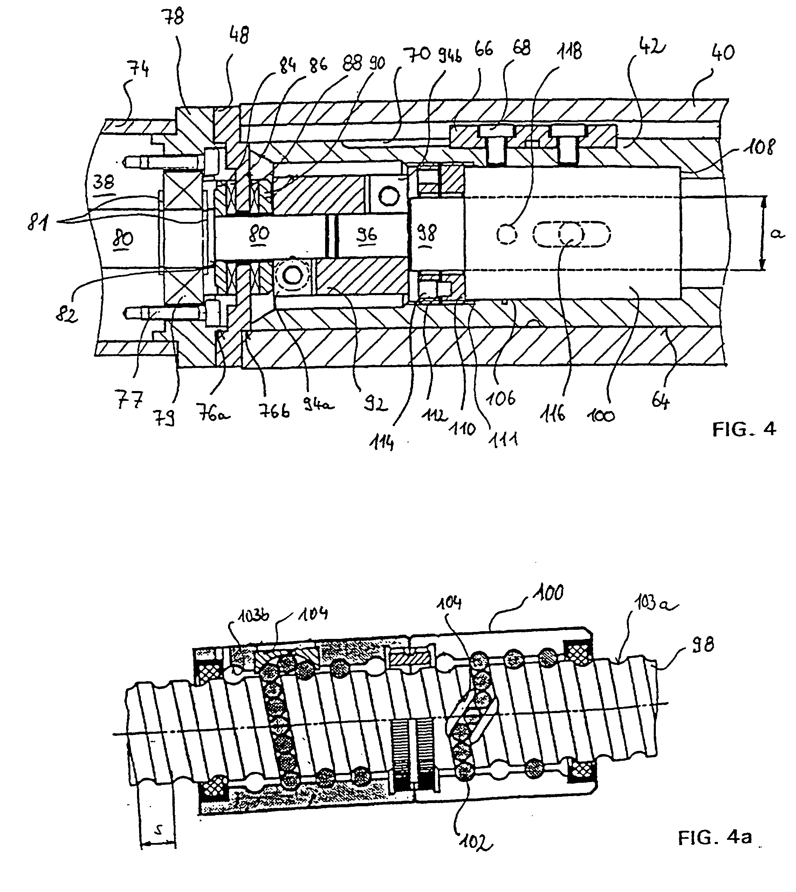

Um den Rohrkörper 42 im Gehäuse 40 gegen Verdrehen zu sichern, sind - wie in Fig. 4 und 6 gezeigt - an der Außenumfangsfläche 64 des Rohrkörpers 42 in Keilausnehmungen 70 Führungskeile 66 über in den Führungskeilen 66 versenkte Befestigungsschrauben 68 befestigt. Die Führungskeile 66 stehen über die kreiszylindrische Außenumfangsfläche 64 des Rohrkörpers 42 über und greifen in Linearführungsnuten 72, welche in die radial innere kreiszylindrische Führungsfläche 62 des Gehäuses 40 beispielsweise durch Räumen oder Erodieren eingebracht sind. Im Rohrkörper 42 sind vier derartige Keilausnehmungen 70 jeweils in einem Winkelabstand von 90° angeordnet, wohingegen im Gehäuse 40 nur zwei korrespondierende Linearführungsnuten 72 in einem Winkelabstand von 180° vorgesehen sind. Ein Versetzen der Führungskeile 66 am Rohrkörper 42 um jeweils 90° ermöglicht damit ein Drehen des Rohrkörpers 42 relativ zum Gehäuse 40 und damit ein Verdrehen der Werkzeugaufnahme 58 relativ zum Gehäuse 40 um 90°.

Fig. 4 zeigt ferner vergrößert den Verbindungsbereich zwischen Motor 38 und Gehäuse 40 sowie den drehmotornahen Bereich der im Gehäuse 40 enthaltenem Bauteile. Das Gehäuse 40 ist über die dünnwandige Zwischenplatte 48 mit dem Ständerteil 74 des Drehmotors 38 verbunden. Um eine fluchtende Ausrichtung der Achsen des Gehäuses 40 und des Motors 38 zu erreichen, ist die Zwischenplatte in Achsrichtung motor- und gehäuseseitig mit einem zentrierenden Ansatz 76a und mit einer Zentrierausnehmung 76b versehen. Der zentrierende Ansatz 76a wirkt mit einer korrespondierenden Ringausnehmung einer am Ständerteil 74 über Schraubenbolzen 77 befestigten Stirnplatte 78 des Motors 38 zusammen, welche Stirnplatte 78 eine Motorausgangswelle 80 über ein Radiallager 79 aufnimmt. Das Radiallager 79 ist über Sicherungsringe 81 auf der Ausgangswelle 80 axial gesichert. Gehäuseseitig wirkt die Zentrierausnehmung 76b der Zwischenplatte 48 mit der Innenumfangsfläche 62 des Gehäuses 40 zusammen.

Die Ausgangswelle 80 des Drehmotors 38 weist einen Schulteransatz 82 auf, an dem sich eine motorseitige dünnwandige Stützscheibe 84 abstützt. An ihrem vom Drehmotor 38 abgewandten Ende liegt in Achsrichtung an der Stützscheibe 84 ein Axiallager 86 an, welches sich mit seiner drehmotorfernen Fläche an der drehfesten Zwischenplatte 48 abstützt. Dieses Axiallager 86 ist von einem Kranz radial bezüglich der Ausgangswellenachse liegender Nadeln kleinen Durchmessers gebildet und baut desahlb in Achsrichtung sehr schmal. Bei Rotation der Ausgangswelle 80 dreht sich somit die über den Schulteransatz 82 mit der Ausgangswelle 80 in Eingriff stehende Stützscheibe 84 zusammen mit dem dieser zugewandten Axiallagerteil. An der motorfernen Seite der Zwischenplatte 48 stützt sich ein Axiallager 88 entsprechender Bauweise ab, an welchem wiederum an seiner motorfernen Fläche eine weitere Stützscheibe 90 angeordnet ist. An diese Stützscheibe 90 schließt sich in Achsrichtung eine Kupplung 92 an. Diese Kupplung 92 ist als Rohrelement ausgebildet, welches an seinen beiden Enden jeweils geschlitzt und mit einengenden Spannschrauben 94a, 94b versehen ist.

Die Kupplung 92 verbindet die Motorausgangswelle 80 mit einem Wellenansatz 96 einer Spindel 98. Die Spindel 98 weist einen größeren Außendurchmesser a als der Wellenansatz 96 auf, so daß zwischen Spindel 98 und Ansatz 96 eine Schulter ausgebildet ist, deren Stirnfläche mit der motorfernen Seite der Kupplung 92 zur Übertragung von Axialkräften in Anlage steht.

Die Spindel 98 ist als Gewindespindel ausgebildet, mit welcher eine Kugelumlaufmutter 100 in Eingriff steht. Eine derartige Kugelumlaufmutter ist in Fig. 4a schematisch in Eingriff mit der Gewindespindel 98 dargestellt und zeigt, wie die Kugeln 102 in den Gewindegängen 103a bzw. 103b der Spindel 98 bzw. der Mutter 100 umlaufen und zeigt ferner die Anordnung von Umlenkstücken 104 zum Umlenken der Kugeln 102, um geschlossene Kugelumläufe zu bilden. Die Kugelumlaufmutter 100 ist im Innenraum des Rohrkörpers 42 in einem durchmessererweiterten Abschnitt 106 aufgenommen, der an seinem motorfernen Ende eine Stützschulter 108 zur Übertragung von Axialkräften zwischen Spindelmutter 100 und Rohrkörper 42 aufweist. Am motornahen Ende steht die Kugelumlaufmutter 100 mit einem ersten Außengewindering 110 in Eingriff, welcher in ein Innengewinde 111 im Rohrkörper 42 eingeschraubt ist und die Kugelumlaufmutter 100 gegen die Stützschulter 108 drückt. Um den ersten Außengewindering 110 gegen Herausdrehen zu sichern und um damit zu verhindern, daß sich die Kugelumlaufmutter 100 aus ihrer relativ zum Rohrkörper 42 fixierten Lage löst, ist ein zweiter Außengewindering 112 in das Innengewinde 111 in dem Rohrkörper 42 eingeschraubt, welcher zweite Außengewindering 112 in Axialrichtung verlaufende Gewindedurchgangsbohrungen aufweist. Diese nehmen in Axialrichtung einschraubbare Gewindestifte 114 auf, die stirnseitig auf den ersten Außengewindering 110 drücken und somit die beiden Außengewinderinge 110 und 112 innerhalb des Innengewindes 111 des Rohrkörpers 42 gegeneinander verspannen. Ferner ist die Kugelumlaufmutter 100 über einen Sicherungsbolzen 116 im Rohrkörper 42 gegen Verdrehen gesichert. Bei 118 ist eine Öffnung für den Durchtritt von Schmiermittel in die Kugelumlaufmutter 100 vorgesehen.

Fig. 3 und 4 zeigen, daß der Rohrkörper 42 an seinem motornahen Ende derart ausgebildet ist, daß er in seiner motornächsten Stellung bis zur Anlage an der Zwischenplatte 48 herangefahren ist und in dieser Stellung die Kupplung 92 und einen Teil der Axiallagerung aufnimmt.

Dreht sich die Motorausgangswelle 80, so wird die Drehung über die Kupplung 92 auf die Gewindespindel 98 übertragen. Bei einer Drehung der Gewindespindel 98 bewirkt der gegenseitige Eingriff zwischen den Kugeln 102 und den Gewindegängen 103a der Gewindespindel 98 einerseits und den Gewindegängen 103b der Kugelumlaufmutter 100 andererseits, daß sich bei drehfester Fixierung der Kugelumlaufmutter 100 im Rohrkörper 42 und des Rohrkörpers 42 wiederum im Gehäuse 40 die Kugelumlaufmutter in linearer Richtung entsprechend der Drehrichtung der Spindel 98 bewegt und den Rohrkörper 42 innerhalb des Gehäuses 40 in Linearrichtung verschiebt.

Eine Übertragung von Zug- bzw. Druckkräften in Richtung der Achse A vom Rohrkörper 42 auf das Gehäuse 40 erfolgt über die Schulter 108 bzw. die Außengewinderinge 110, 112 auf die Spindelmutter 100, von dieser über den Gewindeeingriff auf die Gewindespindel 98, von dieser über die Kupplung 92 auf das Axiallager 86 unter Zwischenschaltung der Ausgangswelle 80 bzw. auf das Axiallager 88 und schließlich vom jeweiligen Axiallager 86 bzw. 88 auf die Zwischenplatte 48.

Beim Drehen der Ausgangswelle 80 drehen mit dieser die Stützscheiben 84, 90 und die Axiallager 86, 88 mit, die dank ihrer Funktion als reine Axiallager und ihrer dünnen Bauweise trägheitsarm sind. Auch die Kupplung 92, welche in Fig. 4 nur schematisch dargestellt ist, kann trägheitsmomentarm ausgeführt sein, so daß das beim Anlaufen der Ausgangswelle 80 zu beschleunigende Trägheitsmoment klein gehalten ist und ein rascher Hochlauf möglich ist.

Es sei ergänzend erwähnt, daß das Gehäuse 40 an seinem drehmotorfernen Ende mit einem Verschlußring 120 versehen ist, welcher die drehmotorferne Ausgangsöffnung des Linearstellgeräts 34 definiert und über Schraubenbolzen 122 am Gehäuse 40 befestigt ist. Der Verschlußring 120 weist an seiner radial inneren Umfangsfläche Ausnehmungen 124, 126 auf, in welche ringförmige Dichtungen 128, 130 eingesetzt sind. Die Dichtung 128 dient dabei dazu, das Innere des Gehäuses 40 gegen ein Austreten von Schmiermittel bei einer Bewegung des Rohrkörpers 42 abzudichten, wohingegen die Dichtung 130 mit Dichtlippe zur schmutzabweisenden Anlage an der Außenumfangsfläche des Rohrkörpers 42 ausgebildet ist.

Ferner ist anzumerken, daß das über den Schmiernippel 56 zugeführte Schmiermittel über Schmiermittelkanäle sowohl in den Zwischenraum zwischen der Innenumfangsfläche des Gehäuses 40 und der Außenumfangsfläche des Rohrkörpers 42 als auch zu den Axiallagern 86, 88, als auch in den Zwischenraum zwischen der Gewindespindel 98 und der Spindelmutter 100, als auch zwischen die Führungskeile 66 und die Führungsnuten 72 eindringen kann. Um auch eine zuverlässige Schmiermittelversorgung des vorderen schmiernippelfernen Bereichs der Führung zwischen Gehäuse 40 und Rohrkörper 42 sicherzustellen, ist in diesem Bereich ein Schmiermittelreservoir 132 vorgesehen.

Es sei ferner ergänzt, daß die Werkzeugaufnahme 58 stirnseitig mit einer Bohrung 134 versehen ist, welche über eine entfernbare Verschlußkappe 136 verschließbar ist. Die Bohrung 134 ist bis in den Spindelaufnahmekanal 65 durchgängig und erlaubt somit von der Stirnseite der Werkzeugaufnahme 58 aus einen Zugang zur drehmotorfernen Stirnseite der Spindel 98. In dieser drehmotorfernen Stirnseite der Spindel 98 ist eine Innensechskantausnehmung 138 vorgesehen, in welche ein Werkzeug mit einem Außensechskantprofil zur manuellen Drehbewegung der Spindel 98 eingreifen kann. Dies kann beispielsweise zu Reparaturzwecken erforderlich sein.

Schließlich sei noch ergänzt, daß - wie in Fig. 5 zu erkennen - im Gehäuse eine Belüftungsbohrung 140 vorgesehen ist, welche ein Ansaugen bzw. Ausstoßen von Luft beim Ein- und Ausfahren des Rohrkörpers 42 erlaubt. Zur Reinhaltung des Gehäuseinnenraums ist in der Belüftungsbohrung 140 ein luftdurchlässiges Filterelement 142 vorgesehen.

Im folgenden werden technische Daten und Maße von Ausführungsbeispielen des erfindungsgemäßen Linearstellgeräts 34 angegeben.
- Als Drehmotor kommt beispielsweise ein AC-Servomotor der Firma Eduard BAUTZ GmbH vom Typ 256D in Frage.
- Das erfindungsgemäße Linearstellgerät ist für Hübe im Bereich von - 60 mm oder 120 mm ausgelegt. In den Figuren dargestellt ist ein Linearstellgerät für einen Hub von 120 mm.
- Die Gewindespindel 98 kann mit einer Steigung s von 5 mm ausgeführt werden. Mit dem vorstehenden Motor erhält man bei einer derartigen Steigung s im Dauerbetrieb eine Nennkraft von 600 N, im Kurzzeitbetrieb eine Maximalkraft von 3000 N, im Dauerbetrieb eine Haltekraft von 700 N und eine Geschwindigkeit der Werkzeugaufnahme 58 von maximal 0,5 m/sec.
- Die Gewindespindel 98 kann auch mit einer Steigung s von 10 mm ausgeführt sein. Mit einer derartigen Gewindespindel und dem vorstehend genannten Motor erhält man eine Nennkraft von 300 N im Dauerbetrieb, eine Maximalkraft von 1500 N im Kurzzeitbetrieb, eine Haltekraft von 350 N im Dauerbetrieb und eine maximale Geschwindigkeit der Werkzeugaufnahme 58 von 1 m/sec.
- Mit dem erfindungsgemäßen Linearstellgerät läßt sich eine Beschleunigung des Motors auf 6000 Umdrehungen pro Minute innerhalb von 18 msec. erzielen.
- Bei einem maximalen Hub von 120 mm beträgt die Länge L des gezeichneten Gehäuses 40 samt Verschlußring 120 etwa 210 mm, die Seitenlänge b des quadratischen Außenquerschnitts des Gehäuses 40 beträgt 56 mm, der Außendurchmesser d des Rohrkörpers 42 beträgt 40 mm, der Außendurchmesser der Spindel 98 beträgt 16 mm und der Innendurchmesser des Spindelaufnahmekanals 65 beträgt 23 mm.
- Die Kupplung besitzt eine Axiallänge von 28 mm, die Spindelmutter besitzt eine Axiallänge von 45 mm und einen Außendurchmesser von 28 mm.

Die Figuren sind im wesentlichen maßstäblich, so daß sich aus den vorstehend angegebenen Maßen alle anderen Maße ergeben.

Besonders zu beachten ist die für die obigen Leistungsdaten und Wegdaten extrem kleine Bauweise, sowohl hinsichtlich des Durchmessers als auch hinsichtlich der Länge. Der kleine Durchmesser wird dadurch möglich, daß der Rohrkörper 42 jeweils über seine gesamte Überlappungslänge in führendem Eingriff mit dem Gehäuse steht und zwar über einen Großteil des Rohrkörperumfangs. Die gleichmäßige Verteilung der Ausnehmungen 70 und Nuten 72 über den Umfang erlaubt eine Belastung des Linearstellgeräts 34 mit erheblichen Biegekräften, die insbesondere dann auftreten können, wenn gegenüber der Achse A exzentrische Belastungen und Biegemomente auf das Linearstellgerät zu erwarten sind. Die geringe Längenausdehnung des Linearstellgeräts 34 für einen gegebenen Hub ist auf die Unterbringung der Spindelmutter 100 im Rohrkörper 42 und auf die axial kurz bauende Lagerung zurückzuführen. Dabei fällt ins Geweicht, daß die radiele Lagerung der Spindel 98 allein auf dem als Teil des Drehmotors 38 ohnehin unvermeidlichen Radiallager 79 und der Spindelmutter 100 beruht. Erst bei sehr großem Hub entsprechend einer Spindellänge von 300 mm wird eine zusätzliche Radiallagerung der Spindel 98 in ihrem motorfernen Endbereich in Betracht gezogen.

## Patentansprüche

1. Linearstellgerät (34) mit einem einen Ständerteil (74) und einen Läuferteil umfassenden elektrischen Drehmotor (38), dessen Läuferteil in definierte Winkelstellungen zum Ständerteil (74) durch elektrische Steuermittel einstellbar ist,
ferner mit einer ortsfest gegenüber dem Ständerteil (74) festgelegten Linearführungseinheit (40),
ferner mit einer unverdrehbar in der Linearführungseinheit (40) entlang einer Linearführungsbahn (A) geführten Schlitteneinheit (42), ferner mit einem Schraubtrieb, wobei dieser Schraubtrieb aufgebaut ist
mit einer zur gemeinsamen Drehbewegung mit dem Läuferteil (80) verbundenen in ihrer Achsrichtung gegenüber dem Ständerteil (74) feststehenden Spindel (98) und
einer mit dieser Spindel (98) zusammenwirkenden, zur gemeinsamen Linearbewegung mit der Schlitteneinheit (42) drehfest verbundenen Spindelmutter ( 100),
wobei eine in dem Ständerteil (74) durch ein Radiallager gelagerte Ausgangswelle (80) des Läuferteils in Flucht mit der Spindel (98) angeordnet und mit der Spindel (98) zur gemeinsamen Drehbewegung durch eine Kupplungseinheit (92) verbunden ist, **gekennzeichnet durch** die Kombination folgender Merkmale:
a) die Schlitteneinheit umfaßt einen kreiszylindrischen Rohrkörper (42) mit einer Achse (A), einen in Achsrichtung verlaufenden Spindelaufnahmekanal (65) und eine radial äußere kreiszylindrische Führungsfläche (64);
b) die Führungseinheit (40) umfaßt einen Führungskanal mit einer radial inneren kreiszylindrischen Führungsfläche (62);
c) die radial äußere kreiszylindrische Führungsfläche (64) des Rohrkörpers (42) liegt nahezu auf ihrer ganzen jeweiligen Überlappungslänge in gleitendem Führungseingriff mit der radial inneren Führungsfläche (62) des Führungskanals;
d) innerhalb des Rohrkörpers (42) ist die Spindelmutter (100) und eine Aufnahmekammer für wenigstens einen Teil der Kupplungseinheit (92) untergebracht.

2. Einrichtung nach Anspruch 1,
**dadurch gekennzeichnet,**
**daß** die Ausgangswelle (80) des Läuferteils an einer zwischen dem Radiallager und der Kupplungseinheit (92) am Ständerteil (74) angeordneten Stützplatte (48) in entgegengesetzten Kraftübertragungsrichtungen durch je ein Axiallager (86,88) in Achsrichtung der Ausgangswelle (80) abgestützt ist.

3. Einrichtung nach Anspruch 2,
**dadurch gekennzeichnet,**
**daß** die Führungseinheit (40) bis an die Stützplatte (48) heranreicht.

4. Einrichtung nach Anspruch 2 oder 3,
**dadurch gekennzeichnet,**
**daß** die Stützplatte (48) sowohl gegenüber der Ständereinheit (74) als auch gegenüber der Führungseinheit (40) durch Zentriermittel (76a,76b) zentriert ist.

5. Einrichtung nach einem der Ansprüche 2 - 4,
**dadurch gekennzeichnet,**
**daß** der Rohrkörper (42) in seiner motornächsten Stellung mit seinem motorzugekehrten Ende bis annähernd an den Rotationsmotor (38) heranreicht, vorzugsweise bis zum Anschlag an der Stützplatte (48).

6. Einrichtung nach einem der Ansprüche 2 - 5,
**dadurch gekennzeichnet,**
**daß** die Axiallager (86,88) als Nadel- oder Rollenlager ausgebildet sind mit Nadeln bzw. Rollen, deren Nadel- bzw. Rollenachsen radial zur Achse der Ausgangswelle (80) hin gerichtet sind.

7. Einrichtung nach einem der Ansprüche 2 - 6,
**dadurch gekennzeichnet,**
**daß** die Spindel (98) gegen Annäherung an die Ausgangswelle (80) durch eine auf Axialdruck belastbare, drehmomentschlüssig und zugkraftschlüssig mit der Ausgangswelle (80) und der Spindel (98) verbundene Kupplungshülse (92) an einem ersten Axiallager (88) formschlüssig abgestützt ist und daß die Spindel (98) gegen Entfernung von der Ausgangswelle (80) vermittels des Kraftschlusses der Kupplungshülse (92) mit der Ausgangswelle (80) und der Spindel (98) über ein zweites Axiallager (86) abgestützt ist.

8. Einrichtung nach einem der Ansprüche 1 - 7,
**dadurch gekennzeichnet,**
**daß** die Führungseinheit (40) - in einer zur Linearführungsbahn (A) orthogonalen Schnittebene betrachtet - einen quadratischen Außenumriß besitzt und mit Positionierungs- und Befestigungsmittel (50a,50b,52) zur Befestigung an einem Träger (36) ausgeführt ist.

9. Einrichtung nach einem der Ansprüche 1 - 8,
**dadurch gekennzeichnet,**
**daß** die Führungseinheit (40) an ihrem Außenumfang mit Kühlrippen (54) versehen ist, deren Hüllfläche Anlageflächen zur Anlage an einem Träger (36) bilden.

10. Einrichtung nach einem der Ansprüche 1 - 9,
**dadurch gekennzeichnet,**
**daß** der Rohrkörper (42) in dem Führungskanal durch Führungskeile (66), Führungsrollen oder dergleichen gegen Verdrehung gesichert ist.

11. Einrichtung nach einem der Ansprüche 1 - 10,
**dadurch gekennzeichnet,**
**daß** zumindest an dem von dem Drehmotor (38) abgelegenen Ende der Führungseinheit (40) Dichtmittel (128,130) angeordnet sind, welche in dichtendem Eingriff mit der kreiszylindrischen Außenumfangsfläche (64) des Rohrkörpers stehen.

12. Einrichtung nach einem der Ansprüche 1 - 11,
**dadurch gekennzeichnet,**
**daß** die Spindelmutter (100) eine Kugelumlaufmutter ist.

13. Einrichtung nach einem der Ansprüche 1 - 12,
**dadurch gekennzeichnet,**
**daß** die Spindelmutter (100) in einem durchmessererweiterten Abschnitt (106) des Spindelaufnahmekanals untergebracht ist und durch eine Schraubringeinheit (110,112,114) gegen eine Stützschulter (108) am Ende der Durchmessererweiterung (106) angedrückt ist.

14. Einrichtung nach einem der Ansprüche 1 - 13,
**dadurch gekennzeichnet,**
**daß** der Rohrkörper (42) an seinem von dem Drehmotor (38) abgelegenen Ende geschlossen und mit Befestigungsmitteln (58) zur Befestigung eines Bearbeitungselements (44) ausgeführt ist.

15. Einrichtung nach einem der Ansprüche 1 - 14,
**dadurch gekennzeichnet,**
**daß** das Linearstellgerät (34) mit einem Schmiernippelanschluß (56) versehen ist, der über Schmiermittelwege mit dem jeweiligen Eingriffsbereich zwischen der radial äußeren Führungsfläche (64) des Rohrkörpers (42) und der radial inneren Führungsfläche (62) der Führungseinheit (40) und/oder mit den Axiallagern (86,88) und/oder mit der Eingriffsstelle zwischen Spindel (98) und Spindelmutter (100) und/oder mit das Verdrehen des Rohrkörpers (42) gegenüber der Führungseinheit (40) hemmenden Drehsicherungsmitteln (66,72) verbunden ist.

16. Einrichtung nach einem der Ansprüche 1 - 15,
**dadurch gekennzeichnet,**
**daß** die Spindelmutter (100) und die Kupplungseinheit (92) innerhalb eines Längsabschnitts des Rohrkörpers (42) untergebracht ist, welcher sich ausgehend von einem dem Drehmotor (38) zugekehrten Ende des Rohrkörpers (38) über eine Länge erstreckt, welche weniger als 50 % der Gesamtlänge der führungsaktiven radial äußeren Führungsfläche (64) des Rohrkörpers (42) beträgt.

17. Einrichtung nach einem der Ansprüche 1 - 16,
**dadurch gekennzeichnet,**
**daß** in der vom Drehmotor (38) am weitesten entfernten Stellung des Rohrkörpers (42) die noch verbleibende Überlappungslänge der radial inneren Führungsfläche (62) der Führungseinheit (42) und der radial äußeren Führungsfläche (64) des Rohrkörpers (42) mindestens das Zweifache des Durchmessers (d) der Führungsfläche des Rohrkörpers (42) beträgt.

18. Verwendung eines Linearstellgerätes (34) nach einem der vorhergehenden Ansprüche in einer Objektbearbeitungseinrichtung (10), umfassend Objektaufnahmemittel (12) und ein durch das Linearstellgerät (34) längs einer Linearführungsbahn relativ zu den Objektaufnahmemitteln (12) verstellbares Objektbearbeitungselement (44).

## Claims

1. Linear adjusting apparatus (34) comprising an electric torque motor (38) which comprises a stator part (74) and a rotor part, the rotor part of which can be adjusted in defined angular positions with respect to the stator part (74) by electric control means, also comprising a linear guide unit (40) which is stationarily fixed relative to the stator part (74), also comprising a slide unit (42) guided non-rotatably in the linear guide unit (40) along a linear guideway (A), also comprising a helicoidal drive, wherein this helicoidal drive is constructed
with a spindle (98) connected to the rotor part (80) for common rotary movement and fixed in its axial direction relative to the stator part (74) and
with a spindle nut (100) cooperating with this spindle (98) and non-rotatably connected to the carriage unit (42) for common linear movement,
wherein an output shaft (90) of the rotor part mounted in the stator part (74) by a radial bearing is arranged flush with the spindle (98) and is connected to the spindle (98) for common rotary movement by a coupling unit (92), **characterised by** the combination of the following features:
a) the carriage unit comprises a circular cylindrical tubular body (42) with an axis (A), a spindle receiving channel (65) extending in the axial direction and a radially outer circular cylindrical guide face (64);
b) the guide unit (40) comprises a guide channel with a radially inner circular cylindrical guide face (62);
c) the radially outer circular cylindrical guide face (64) of the tubular body (42) lies virtually over its entire respective overlapping length in sliding guiding engagement with the radially inner guide face (62) of the guide channel;
d) the spindle nut (100) and a receiving chamber for at least part of the coupling unit (92) are housed inside the tubular body (42).

2. Device according to claim 1, **characterised in that** the output shaft (80) of the rotor part is supported in the axial direction of the output shaft (80) by a respective axial bearing (86, 88) in opposing force transmission directions on a support plate (48) arranged between the radial bearing and the coupling unit (98) on the rotor part (74).

3. Device according to claim 2, **characterised in that** the guide unit (40) reaches up to the support plate (48).

4. Device according to claim 2 or 3, **characterised in that** the support plate (48) is centred by centring means (76a, 76b) both with respect to the stator unit (74) and also with respect to the guide unit (40).

5. Device according to any one of claims 2 to 4, **characterised in that** the tubular body (42) in its position closest to the motor reaches with its end facing the motor virtually up to the rotary motor (38), preferably up to the stop on the support plate (48).

6. Device according to any one of claims 2 to 5, **characterised in that** the axial bearings (86, 88) are designed as needle or roller bearings with needles or rollers, the needle or roller axes of which are directed radially towards the axis of the output shaft (80).

7. Device according to any one of claims 2 to 6, **characterised in that** the spindle (98) is supported in an interlocking manner on a first axial bearing (88) to prevent it approaching the output shaft (80), by a coupling sleeve (92) which can be loaded for axial pressure and is connected by torque and tensile force to the output shaft (80) and **in that** the spindle (98) is supported to prevent its removal from the output shaft (80) by means of the non-positive fit of the coupling sleeve (92) to the output shaft (80) and the spindle (98) via a second axial bearing (86).

8. Device according to any one of claims 1 to 7, **characterised in that** the guide unit (40) - observed in a sectional plane which is orthogonal to the linear guideway (A) - has a square external contour and is designed with positioning and fastening means (50a, 50b, 52) for fastening to a carrier (36).

9. Device according to any one of claims 1 to 8, **characterised in that** the guide unit (40) is provided at its outer periphery with cooling ribs (54), the enveloping surfaces of which form contact faces for contacting a carrier (36).

10. Device according to any one of claims 1 to 9, **characterised in that** the tubular body (42) is secured in the guide channel by guide wedges (66), guide rollers or the like against rotation.

11. Device according to any one of claims 1 to 10, **characterised in that** arranged, at least at the end of the guide unit (40) remote from the torque motor (38) are sealing means (128, 130), which are in sealing engagement with the circular cylindrical outer peripheral face (64) of the tubular body.

12. Device according to any one of claims 1 to 11, **characterised in that** the spindle nut (100) is a revolving ball nut.

13. Device according to any one of claims 1 to 12, **characterised in that** the spindle nut (100) is housed in a section (106), which has an expanded diameter, of the spindle receiving channel and is pressed against a support shoulder (108) at the end of the diameter expansion (106) by a threaded ring unit (110, 112, 114).

14. Device according to any one of claims 1 to 13, **characterised in that** the tubular body (42) is closed at its end remote from the torque motor (38) and is designed with fastening means (58) for fastening a treating element (44).

15. Device according to any one of claims 1 to 14, **characterised in that** the linear adjusting apparatus (34) is provided with a lubricating nipple connection (56) which is connected via lubricating means to the respective engagement region between the radially outer guide face (64) of the tubular body (42) and the radially inner guide face (62) of the guide unit (40) and/or to the axial bearings (86, 88) and/or to the engagement point between the spindle (98) and spindle nut (100) and/or to the rotation preventing means (66, 72) preventing the rotation of the tubular body (42) with respect to the guide unit (40).

16. Device according to any one of claims 1 to 15, **characterised in that** the spindle nut (100) and the coupling unit (92) are housed within a longitudinal section of the tubular body (42) which extends starting from an end of the tubular body (38) facing the torque motor (38) over a length which is less than 50% of the total length of the radially outer guide face (64) of the tubular body (42) which is active with respect to guiding.

17. Device according to any one of claims 1 to 16, **characterised in that** in the position of the tubular body (42) most remote from the torque motor (38), the still-remaining overlapping length of the radially inner guide face (62) of the guide unit (42) and of the radially outer guide face (64) of the tubular body (42) has at least twice the diameter (d) of the guide face of the tubular body (42).

18. Use of a linear adjusting apparatus (34) according to any one of the preceding claims, in an object processing device (10), comprising object receiving means (12) and an object processing element (44) which can be adjusted relative to the object receiving means (12) along a linear guideway by the linear adjusting apparatus (34).

## Revendications

1. Dispositif de positionnement linéaire (34) avec un moteur électrique (38) comprenant une partie support (74) et une partie mobile, dont la partie mobile peut être placée dans des positions angulaires définies par rapport à la partie support (74) par des moyens de commande électriques,
avec de plus une unité de guidage linéaire (40) fixe par rapport à la partie support (74),
avec de plus une unité de chariot (42) guidée de manière immobile en rotation dans l'unité de guidage linéaire (40) le long d'une voie de guidage linéaire (A),
avec de plus une broche à vis, cette broche à vis étant constituée
avec une broche (98) reliée à la partie mobile (80) en vue d'un mouvement de rotation commun et fixe par rapport à la partie support (74) dans sa direction axiale, et
un écrou (100) coopérant avec cette broche (98) et relié à l'unité de chariot (42) de manière solidaire en rotation en vue d'un mouvement linéaire commun,
un arbre de sortie (80) de la partie mobile soutenu dans la partie support (74) par un palier radial étant placé en alignement avec la broche (98) et étant relié à la broche (98) par une unité d'accouplement (92) en vue d'un mouvement de rotation commun,
**caractérisé par** la combinaison des caractéristiques suivantes :
a) l'unité de chariot comprend un corps tubulaire cylindrique circulaire (42) avec un axe (A), un canal (65) de réception de broche s'étendant dans la direction axiale et une surface de guidage (64) cylindrique circulaire radialement extérieure ;
b) l'unité de guidage (40) comprend un canal de guidage avec une surface de guidage (62) cylindrique circulaire radialement intérieure ;
c) la surface de guidage (64) cylindrique circulaire radialement extérieure du corps tubulaire (42) se trouve pratiquement sur toute sa longueur de chevauchement respective en prise de guidage glissant avec la surface de guidage (62) radialement intérieure du canal de guidage ;
d) dans le corps tubulaire (42) sont logés l'écrou de broche (100) et une chambre de réception pour au moins une partie de l'unité d'accouplement (92).

2. Dispositif selon la revendication 1,
**caractérisé en ce que**
l'arbre de sortie (80) de la partie mobile est appuyée dans la direction axiale de l'arbre de sortie (80) contre une plaque de soutien (48) placée sur la partie support (74) entre le palier radial et l'unité d'accouplement (92), dans des directions opposées à la direction de transmission de force et par un palier axial à chaque fois (86, 88).

3. Dispositif selon la revendication 2,
**caractérisé en ce que**
l'unité de guidage (40) va jusqu'à la plaque de soutien (48).

4. Dispositif selon la revendication 2 ou 3,
**caractérisé en ce que**
la plaque de soutien (48) est centrée à la fois par rapport à l'unité support (74) et par rapport à l'unité de guidage (40) par des moyens de centrage (76a, 76b).

5. Dispositif selon l'une des revendications 2 à 4,
**caractérisé en ce que**,
dans sa position la plus proche du moteur, le corps tubulaire (42) va avec son extrémité tournée vers le moteur approximativement jusqu'au moteur de rotation (38), de préférence jusqu'en butée contre la plaque de soutien (48).

6. Dispositif selon l'une des revendications 2 à 5,
**caractérisé en ce que**
les paliers axiaux (86, 88) sont conformés en paliers à aiguilles ou à rouleaux, avec des aiguilles ou des rouleaux dont les axes d'aiguille ou de rouleau sont orientés radialement à l'axe de l'arbre de sortie (80).

7. Dispositif selon l'une des revendications 2 à 6,
**caractérisé en ce que**
la broche (98) est soutenue par engagement positif contre un premier palier axial (88) contre un rapprochement vers l'arbre de sortie (80) par une douille d'accouplement (92) chargeable en pression axiale, reliée en couple de rotation et force de traction à l'arbre de sortie (80) et à la broche (98), et **en ce que** la broche (98) est soutenue contre un éloignement depuis l'arbre de sortie (80) au moyen de l'adhérence de la douille d'accouplement (94) avec l'arbre de sortie (80) et la broche (98) par l'intermédiaire d'un deuxième palier axial (86).

8. Dispositif selon l'une des revendications 1 à 7,
**caractérisé en ce que**
l'unité de guidage (40) - en regardant dans un plan de coupe orthogonal à la voie de guidage linéaire (A) - présente un contour extérieur carré et est réalisé avec des moyens de positionnement et de fixation (50a, 50b, 52) en vue d'une fixation sur un support (36).

9. Dispositif selon l'une des revendications 1 à 8,
**caractérisé en ce que**
l'unité de guidage (40) est munie, à sa périphérie extérieure, d'ailettes de refroidissement dont les surfaces d'enveloppe forment des surfaces d'appui en vue d'un appui sur un support (36).

10. Dispositif selon l'une des revendications 1 à 9,
**caractérisé en ce que**
le corps tubulaire (42) est immobilisé en rotation dans le canal de guidage par des cales de guidage (66), des rouleaux de guidage ou analogues.

11. Dispositif selon l'une des revendications 1 à 10,
**caractérisé en ce qu'**
au moins sur l'extrémité de l'unité de guidage (40) éloignée du moteur de rotation (38), il est prévu des moyens d'étanchéité (128, 130) qui sont en prise d'étanchéité avec la surface périphérique extérieure (64) cylindrique circulaire du corps tubulaire.

12. Dispositif selon l'une des revendications 1 à 11,
**caractérisé en ce que**
l'écrou de broche (100) est un écrou à circulation de billes.

13. Dispositif selon l'une des revendications 1 à 12,
**caractérisé en ce que**
l'écrou de broche (100) est logée dans une section (106) de diamètre élargi du canal de réception de broche et est pressé par une unité à bague vissante (110, 112, 114) contre un épaulement de soutien (108) situé à l'extrémité de l'élargissement de diamètre (106).

14. Dispositif selon l'une des revendications 1 à 13,
**caractérisé en ce que**
le corps tubulaire (42) est fermé à son extrémité éloignée du moteur de rotation (38) et est réalisé avec des moyens de fixation (58) pour la fixation d'un élément d'usinage (44).

15. Dispositif selon l'une des revendications 1 à 14,
**caractérisé en ce que**
l'appareil de positionnement linéaire (34) est muni d'un raccord à nipple de graissage (56) qui est relié par des voies d'agent de graissage à la zone de prise respective entre la surface de guidage radialement extérieure (64) du corps tubulaire (42) et la surface de guidage radialement intérieure (62) de l'unité de guidage (40) et/ou aux paliers axiaux (86, 88) et/ou aux zones de prise entre la broche (98) et l'écrou de broche (100) et/ou à des moyens de sécurisation en rotation (66, 72) empêchant la rotation du corps tubulaire (42) par rapport à l'unité de guidage (40).

16. Dispositif selon l'une des revendications 1 à 15,
**caractérisé en ce que**
l'écrou de broche (100) et l'unité d'accouplement (92) sont logés dans une section de longueur du corps tubulaire (42) qui, depuis une extrémité du corps tubulaire (38) tournée vers le moteur de rotation (38), s'étend sur une longueur qui vaut au moins 50 % de la longueur totale de la surface de guidage radialement extérieure (64) du corps tubulaire active en guidage.

17. Dispositif selon l'une des revendications 1 à 16,
**caractérisé en ce que**,
dans la position du corps tubulaire (42) la plus éloignée du moteur de rotation (38), la longueur de chevauchement restante entre la surface de guidage radialement intérieure (62) de l'unité de guidage et la surface de guidage radialement extérieure (64) du corps tubulaire vaut au moins le double du diamètre (d) de la surface de guidage du corps tubulaire (42).

18. Utilisation d'un dispositif de positionnement linéaire (34) selon l'une des revendications précédentes dans un dispositif d'usinage d'objets (10), comprenant des moyens de réception d'objet (12) et un élément d'usinage d'objet (44) mobile par le dispositif de positionnement linéaire (34) le iong d'une voie de guidage linéaire par rapport aux moyens de réception d'objet (12).
